# EUROPÄISCHE PATENTSCHRIFT

(11) **EP 0 683 827 B1**
(45) Veröffentlichungstag und Bekanntmachung des Hinweises auf die Patenterteilung: **15.01.1997**
(21) Anmeldenummer: 95903210.3
(22) Anmeldetag: 09.12.1994
(51) Int. Cl.: D01F 2/00, C08J 5/18, C08B 1/00

(54) **VERFAHREN ZUR HERSTELLUNG CELLULOSISCHER FORMKÖRPER**
PROCESS FOR PRODUCING SHAPED CELLULOSE BODIES
PROCEDE DE FABRICATION DE CORPS MOULES EN CELLULOSE

(30) Priorität: 10.12.1993 AT 2498/93
(43) Veröffentlichungstag der Anmeldung: 29.11.1995
(73) Patentinhaber: LENZING AKTIENGESELLSCHAFT, 4860 Lenzing (AT)
(72) Erfinder: EIBL, Markus, A-6960 Wolfurt (AT); FIRGO, Heinrich, A-4840 Vöcklabruck (AT)
(74) Vertreter: Schwarz, Albin, Dr. Kopecky & Schwarz Patentanwälte
(86) Internationale Anmeldenummer: AT9400192
(87) Internationale Veröffentlichungsnummer: WO9516063

(56) Entgegenhaltungen:
- WO-A-94/24343
- DD-A- 286 001
- US-A- 4 261 943

## Beschreibung

Die vorliegende Erfindung betrifft ein Verfahren zur Herstellung cellulosischer Formkörper, insbesondere Folien und Fasern, indem eine Lösung von Cellulose in einem tertiären Aminoxid durch eine Formgebungsvorrichtung, z.B. einen folienbildenden Spalt oder durch Spinnlöcher einer Spinndüse, extrudiert und die extrudierte Lösung unter Verzug in ein wässeriges Fällbad geführt wird, in welchem sie koaguliert, wonach der koagulierte Formkörper mit einer wässerigen Waschflüssigkeit gewaschen wird.

Als Alternative zum Viskoseverfahren wurden in den letzten Jahren eine Reihe von Verfahren beschrieben, bei denen Cellulose ohne Bildung eines Derivats in einem organischen Lösungsmittel, einer Kombination eines organischen Lösungsmittels mit einem anorganischen Salz oder in wässerigen Salzlösungen gelöst wird. Cellulosefasern, die aus solchen Lösungen hergestellt werden, erhielten von der BISFA (The International Bureau for the Standardisation of man made Fibres) den Gattungsnamen Lyocell zugeteilt. Als Lyocell wird von der BISFA eine Cellulosefaser definiert, die durch eine Spinnverfahren aus einem organischen Lösungsmittel erhalten wird. Unter "organisches Lösungsmittel" wird von der BISFA ein Gemisch aus einer organischen Chemikalie und Wasser verstanden. "Lösungsmittelspinnen" soll Auflösen und Spinnen ohne Derivatisierung bedeuten.

Bis heute hat sich jedoch nur ein einziges Verfahren zur Herstellung einer Cellulosefaser der Gattung Lyocell bis zur industriellen Realisierung durchgesetzt. Bei diesem Verfahren wird als Lösungsmittel N-Methylmorpholin-N-oxid (NMMO) verwendet. Ein solches Verfahren ist z.B. in der US-A - 4,246,221 beschrieben und liefert Fasern, die sich durch eine hohe Festigkeit, einen hohen Naßmodul und durch eine hohe Schlingenfestigkeit auszeichnen.

Die Brauchbarkeit von Flächengebilden, z.B. Geweben, hergestellt aus den genannten Fasern, wird jedoch durch die ausgeprägte Neigung der Fasern, im nassen Zustand zu fibrillieren, stark eingeschränkt. Unter Fibrillation wird das Aufbrechen der Faser in Längsrichtung bei mechanischer Beanspruchung im nassen Zustand verstanden, wodurch die Faser ein haariges, pelziges Aussehen erhält. Ein aus diesen Fasern hergestelltes und gefärbtes Gewebe verliert im Laufe einiger Wäschen aufgrund der Vergrauung stark an Farbintensität. Dazu kommt noch, daß sich an Scheuer- und Knitterkanten helle Streifen ausbilden. Als Ursache für die Fibrillation wird angenommen, daß die Faser aus in Faserrichtung angeordneten Fibrillen besteht, zwischen denen nur in geringem Ausmaß eine Querverbindung vorhanden ist.

Die WO 92/14871 beschreibt ein Verfahren zur Herstellung einer Faser mit verringerter Fibrillierneigung. Diese wird erzielt, indem alle Bäder, mit denen die Faser vor der ersten Trocknung in Berührung kommt, einen pH-Wert von maximal 8,5 aufweisen.

Die WO 92/07124 beschreibt ebenfalls ein Verfahren zur Herstellung einer Faser mit verringerter Fibrillierneigung, gemäß dem die nicht getrocknete Faser mit einem kationischen Polymer behandelt wird. Als derartiges Polymer wird ein Polymer mit Imidazol- und Azetidin-Gruppen genannt. Zusätzlich kann noch eine Behandlung mit einem emulgierbaren Polymer, wie z.B. Polyethylen oder Polyvinylacetat, oder auch eine Vernetzung mit Glyoxal erfolgen.

Gemäß EP-A - 0 538 977 kann die Fibrillationsneigung cellulosischer Fasern mit Bireaktivfarbstoffen verringert werden.

Weiters ist bereits seit dem Jahr 1983 bekannt, daß die Fibrillationsneigung von aus einer NMMO/Cellulose-Lösung gesponnenen Fasern durch Behandeln mit Glyoxal verringert werden kann (siehe M. Dubé und R.H. Blackwell, Tappi Proceedings 1983 International Dissolving and Specialty Pulps, Seiten 11-119).

Es hat sich gezeigt, daß die bekannten Celluloseformkörper, wie Cellulosefolien und Cellulosefasern der Gattung Lyocell hinsichtlich Fibrillationsneigung noch zu wünschen übrig lassen, und die vorliegende Erfindung stellt sich somit die Aufgabe, ein Verfahren zur Herstellung von Celluloseformkörpern, insbesondere Cellulosefolien und Cellulosefasern der Gattung Lyocell, zur Verfügung zu stellen, die eine weiter verringerte Fibrillationsneigung besitzen.

Dieses Ziel wird bei einem Verfahren der eingangs beschriebenen Art dadurch erreicht, daß das zum Koagulieren eingesetzte Fällbad und/oder die zum Waschen eingesetzte Waschflüssigkeit ein Tensid in gelöster Form enthalten/enthält.

Überraschenderweise konnte gefunden werden, daß Folien und Fasern, welche durch Koagulation der Form- bzw. Spinnmasse in tensidhältigen Bädern hergestellt werden, eine geringere Fibrillationsneigung aufweisen als solche, die in reinem Wasser oder einer Wasser/NMMO-Lösung koaguliert werden. Die besten Ergebnisse werden erfindungsgemäß dann erhalten, wenn der Formkörper in ein tensidhältiges Fällbad extrudiert und mit tensidhältigem Wasser NMMO-frei gewaschen wird.

Die Verbesserungen der Fibrillationsneigung sind weniger stark ausgeprägt, wenn die Faser in ein tensidhältiges Bad gesponnen und mit reinem Wasser NMMO-frei gewaschen wird bzw. in Wasser gesponnen wird und mit tensidhältigem Wasser NMMO-frei gewaschen wird.

Der Begriff "Tensid" soll hier alle grenzflächenaktiven Verbindungen umfassen, die getrennte Molekülbereiche mit lipophilem und hydrophilem Charakter aufweisen (siehe Handbuch der Textilhilfsmittel, Verlag Chemie, 1977; ISBN 3-527-25367-X). Bei anionischen, nichtionischen und kationischen Tensiden konnte ein positiver Einfluß auf die Fibrillationsneigung festgestellt werden.

Eine bevorzugte Variante des erfindungsgemäßen Verfahrens besteht darin, daß das im Fällbad und/oder in der Waschflüssigkeit gelöste Tensid in einer Konzentration enthalten ist, die über der kritischen Micellbildungskonzentration liegt. Es ist dem Fachmann klar, daß die kritische Micellbildungskonzentration keine fixe Größe ist, sondern von einigen Faktoren, wie Temperatur, Elektrolytgehalt etc., abhängt, und daß diese Faktoren bei der Einstellung der Tensidkonzentration naturgemäß berücksichtigt werden müssen.

Sehr gute Ergebnisse werden erzielt, wenn das im Fällbad und/oder in der Waschflüssigkeit gelöste Tensid in einer Konzentration zwischen 0,01 und 5 Masse% vorliegt.

Nach dem erfindungsgemäßen Verfahren können alle bekannten cellulosischen Spinnmassen, die ein tertiäres Aminoxid enthalten, verarbeitet werden. So können diese Spinnmassen zwischen 5 und 25 % Cellulose enthalten. Bevorzugt sind jedoch Cellulosegehalte zwischen 10 und 18 %. Als Rohstoff zur Zellstofferzeugung kann Hart- oder Weichholz eingesetzt werden, wobei die Polymerisationsgrade des/der Zellstoffe im Bereich der technisch gängigen Handelsprodukte liegen können. Es hat sich jedoch gezeigt, daß bei höherem Molekulargewicht des Zellstoffes das Spinnverhalten besser ist. Die Spinntemperatur kann je nach Polymerisationsgrad des Zellstoffes bzw. Lösungskonzentration zwischen 75 und 140°C liegen und kann für jeden Zellstoff bzw. für jede Konzentration auf einfache Weise optimiert werden Der Verzug im Luftspalt hängt bei festgelegtem Titer der Fasern vcm Düsenlochdurchmesser und von der Cellulosekonzentration der Lösung ab.

Es hat sich weiters gezeigt, daß auch dann cellulosische Folien und Fasern mit verringerter Fibrillationsneigung gebildet werden, wenn eine Celluloselösung eingesetzt wird, welche selbst ein Tensid enthält. Dementsprechend umfaßt die vorliegende Erfindung auch die Verwendung von Tensiden als Zusatzstoff mit einer Mindestkonzentration von 0,5 Masse% in einer Lösung von Cellulose in einem tertiären Aminoxid zur Herstellung eines Formkörpers mit verringerter Fibrillierneigung. Die Masse% sind auf die Cellulose bezogen.

Es hat sich gezeigt, daß sich erfindungsgemäß aus Form- bzw. Spinnmassen besonders gut dann Folien und Fasern mit geringer Fibrillationsneigung herstellen lassen, wenn die Form- bzw. Spinnmasse das Tensid zu maximal 5 Masse%, bezogen auf die Cellulose, enthält.

In der erfindungsgemäß eingesetzten Form- bzw. Spinnmasse kann das gleiche oder ein anderes Tensid wie im Fällbad und/oder den Waschwässern enthalten sein.

Nachfolgend werden das Prüfverfahren zur Fibrillationsbeurteilung und bevorzugte Ausführungsformen der Erfindung näher beschrieben.

Spinnmassen bzw. Spinnlösungen ohne Tensidzusatz wurden gemäß dem in der EP-A - 0 356 419 der Anmelderin beschriebenen verfahren aus einer Suspension von Cellulose in einem wässerigen NMMO hergestellt. Spinnlösungen mit Tensidzusatz wurden in Abänderung dieses Verfahrens derart hergestellt, daß die Tenside der Cellulosesupension in einer Menge beigegeben wurden, daß sich in der erhaltenen Celluloselösung der jeweils angegebenen Tensidgehalt einstellte.

Zur Herstellung der Fasern wurde eine 12 %ige Spinnlösung von Sulfit/Sulfat-Zellstoff (12 % Wasser, 76 % NNMO) mit einer Temperatur von 115°C versponnen. Als Spinnapparat wurde ein in der Kunststoffverarbeitung gebräuchliches Schmelzindexgerät der Firma Davenport verwendet. Dieses Gerät besteht aus einem beheizten temperaturregelbaren Zylinder, in den die Spinnmasse eingefüllt wird. Mittels eines Kolbens, der mit einem Gewicht belastet wird, wurde die Spinnmasse durch die an der Unterseite des Zylinders angebrachte Spinndüse (Düsenlochdurchmesser: 100 µm; Ausstoß: 0,03 g Spinnmasse/min/Loch; Titer: 1,7 dtex) extrudiert. Die Spinntemperatur betrug 115°C. Dieses Verfahren wird als Trocken/Naß-Spinnverfahren bezeichnet, da das extrudierte Filament nach Durchlaufen einer Spinnstrecke (=Luftstrecke) in ein Fällbad eintaucht.

Die im Fällbad koagulierten Filamente wurden anschließend mit einer wässerigen Waschflüssigkeit NMMO-frei gewaschen und anschließend getrocknet (12 Stunden bei 60°C). Die getrockneten Fasern wurden in der Folge auf Fibrillationseigenschaften untersucht.

### Fibrillationsbeurteilung

Die Reibung der Fasern aneinander bei Waschvorgängen bzw. bei Ausrüstvorgängen im nassen Zustand wurde durch folgenden Test simuliert: 2 Ansätze zu je 8 Fasern mit einer Länge von 2 cm wurden mit jeweils 4 ml Wasser in jeweils ein 20 ml Probenfläschchen gegeben und in einem Laborschüttelgerät (Type RO-10 der Fa. Gerhardt, Bonn (BRD); 50 Hz, 55W 0,25 A) auf Stufe 12 geschüttelt.

Nach 9 Stunden Schüttelzeit wurden die Fasern unter dem Miskroskop betrachtet und Spleißneigung und Spleißnote bestimmt. Die durchschnittliche Anzahl der Fibrillen (Mittelwert aus 5 Zählungen), die unter dem Miskoskop auf einer Faserlänge von 276 µm gezählt werden konnten, ergibt die Spleißneigung. Die Spleißnote gibt die Art der Fibrillen wieder. Folgende Skala wurde angewendet, um der einzelnen Faser eine Spleißnote zuzuordnen:

| Spleißnote | Fibrillenart |
|---|---|
| 0 = | keine Fibrillen |
| 1 = | Fibrillen mit einer Länge, kleiner als der Faserdurchmesser |
| 2 = | ungekräuselte Fibrillen mit einer Länge, größer als der Faserdurchmesser |
| 3 = | zum Teil gekräuselte Fibrillen |
| 4 = | Fibrillen beginnen die Faser zu umschlingen |
| 5 = | Faser ist von Fibrillen umhüllt |
| 6 = | Desintegration der gesamten Faser in Fibrillen |
| 0-3 Fibrillen und eine Note zwischen 0 und 1 entsprechen einer spleißarmen Faser, wie Modal oder Viskose. | |

### Beispiele 1-7: Tenside im Fällbad

Nach der oben beschriebenen allgemeinen Arbeitsweise wurden bei einer Luftstrecke von 40 mm Celluloselösungen, die kein Tensid enthielten, in verschiedene Spinnbäder extrudiert, die jeweils ein anderes Tensid enthielten. Danach wurden die erhaltenen koagulierten Filamente mit reinem Wasser oder mit tensidhältigem Wasser gewaschen, anschließend unter den oben angegebenen Bedingungen getrocknet und anschließend dem oben beschriebenen Test zur Fibrillationsbeurteilung unterzogen. Die Ergebnisse sind in der nachfolgenden Tabelle angegeben, wobei in einem ersten Ansatz Fasern mit reinem Wasser und in einem zweiten Ansatz Fasern mit tensidhältigem Wasser gewaschen wurden. Wurden sowohl im Fällbad als auch im Waschwasser Tenside verwendet, so waren diese identisch, und auch die angewendete Konzentration war gleich.

**Tabelle 1**

| Bsp. | Fällbad | Wäsche | | | |
|---|---|---|---|---|---|
| | | ohne Tensid | | mit Tensid | |
| | | Zahl | Note | Zahl | Note |
| Vergl. | ohne Tensid | 48 | 4,5 | -- | -- |
| 1 | 1% Barlox 12 | 17,5 | 3,6 | 8,0 | 2,5 |
| 2 | 1% Glucopon 600 CS UP | 26 | 3,5 | 10,5 | 2,5 |
| 3 | 1% Glucopon 225 | 16 | 2,8 | 8,0 | 2,12 |
| 4 | 1% Lutensol TO 20 | 23,5 | 3,3 | 6,0 | 2,0 |
| 5 | 1% Vip Oil AG 62 | 11,5 | 2,6 | 4,0 | 2,0 |
| 6 | 1% Alkylaminoxid | 20 | 3,25 | 18,0 | 3,12 |
| 7 | 0,2% Fluowet | 22 | 4,25 | 8,5 | 2,25 |

Die obigen, in der Spalte "Fällbad" angeführten Bezeichnungen sind Handelsnamen von Tensiden (Barlox 12: Alkyldimethylaminoxid, Hersteller: Lonza AG; Glucopon 600 CS UP: Alkylpolyglycosid, Hersteller: Henkel; Glucopon 225: Fettalkohol-C8-C10-Glycosid, Hersteller: Henkel; Lutensol TO 20: Fettalkoholethoxylat, Hersteller: BASF; Vip Oil AG 62: Cocoaminoxid, Hersteller: Giovanni Bozzetto; Alkylaminoxid: Alkyldimethylaminoxid, Hersteller: Hoechst; Fluowet: wasserlösliches Fluortensid, Hersteller: Hoechst.

Das Vergleichsbeispiel bezieht sich auf ein Fällbad, welches kein Tensid enthielt. Zur Wäsche wurde reines Wasser verwendet.

Enthält das Fällbad ein Tensid, so haben alle Tenside einen positiven Einfluß auf die Fibrillationsneigung, wobei insbesondere dann gute Ergebnisse erzielt werden, wenn mit tensidhältigem Wasser gewaschen wird.

Man erhält beispielsweise durch den Einsatz von 1% Vip Oil AG 62 im Fällbad und Waschwasser eine Reduktion der Fibrillenanzahl von 48 (Vergleich) auf 4,0 und eine Reduktion der Spleißnote von 4,5 (Vergleich) auf 2,0 (siehe Beispiel 5).

### Beispiele 8-13: Keine Tenside im Fällbad

Nach der oben beschriebenen allgemeinen Arbeitsweise wurden bei einer Luftstrecke von 40 mm Celluloselösungen, die kein Tensid enthielten, in ein Spinnbad extrudiert, welches ebenfalls kein Tensid enthielt. Danach wurden die erhaltenen koagulierten Filamente mit reinem Wasser NMMO-frei gewaschen, anschließend im nassen Zustand mit tensidhältigem Wasser gewaschen (aviviert) und getrocknet. Die Ergebnisse sind in der nachfolgenden Tabelle 2 zusammengefaßt.

**Tabelle 2**

| Bsp. | Avivierung | Zahl | Note |
|---|---|---|---|
| Vergl. | ohne Tensid | >60 | 5,25 |
| 8 | 1% Barlox 12 | >60 | 5,0 |
| 9 | 1% Glucopon 600 CS UP | 55 | 5,0 |
| 10 | 1% Glucopon 225 | >60 | 5,25 |
| 11 | 1% Lutensol TO 20 | 49 | 4,75 |
| 12 | 1% Vip Oil AG 70 | >60 | 5,0 |
| 13 | 0,2% Fluowet | >60 | 5,0 |

Im Vergleichsbeispiel wurde nicht mit Tensid aviviert.

Aus der Tabelle 2 ist ersichtlich, daß in diesem Fall, wo in der Spinnmasse und im Fällbad kein Tensid vorhanden ist, die Filamente mit reinem Wasser NMMO-frei gewaschen und mit tensidhältigem Wasser aviviert werden, die Verbesserung der Spleißneigung nicht so stark ausgeprägt ist wie in Tabelle 1.

### Tenside in Spinnmasse und/oder Bad und Wäsche

Gemäß obigem Verfahren wurde mehrere Spinnmassen enthaltend 12 Masse% Cellulose (DP ca. 500) und 4,15 Masse%, bezogen auf Cellulose, Tensid (siehe Tabelle 3; die Prozentangaben in der Tabelle 3 beziehen sich auf die jeweilige Gesamtmasse (Spinnmasse, Fällbad, Wäsche); 0,5% Tensid, bezogen auf die gesamte Spinnmasse, bedeutet somit 4,15%, bezogen auf Cellulose) hergestellt und wie oben beschrieben versponnen. Abhängig davon, ob im Bad ein Tensid vorhanden war und ob ein Tensid in der Waschflüssigkeit vorhanden war, wurden nach Trocknen der Fasern mittels des beschriebenen Spleißtests die nachfolgenden Ergebnisse erhalten.

**Tabelle 3**

| Spinnmasse | Fällbad | Wäsche | A | N |
|---|---|---|---|---|
| (Vergl.) kein Tensid | kein Tensid | kein Tensid | 34 | 4,0 |
| 0,5% Lutensol TO20 | kein Tensid | kein Tensid | 29 | 3,75 |
| kein Tensid | 1% Lutensol TO20 | 1% Lutensol TO20 | 10 | 3,0 |
| kein Tensid | 1% Genaminox CST | 1% Genaminox CST | 22 | 3,5 |
| 0,5% Lutensol TO20 | 1% Lutensol TO20 | 1% Lutensol TO20 | 11 | 2,5 |
| 0,5% Lutensol TO20 | 1% Genaminox CST | 1% Genaminox CST | 23 | 3,25 |
| 0,5% Lutensol TO20 | kein Tensid | 0,5% Lutensol TO20 | 25 | 3,6 |
| 0,5% Fluowet | 1% Lutensol TO20 | 1% Lutensol TO20 | 8 | 2,0 |
| 0,5% Fluowet | 1% Genaminox CST | 1% Genaminox CST | 18 | 3,5 |
| 0,5% Praepagen WK | kein Tensid | kein Tensid | 21 | 3,5 |
| 0,5% Praepagen WK | 1% Praepagen WK | 1% Praepagen WK | 18 | 3,0 |

Wäsche = Waschflüssigkeit; A = Spleißneigung; N = Spleißnote; Genaminox CST ist ein Alkyldimethylaminoxid und wird von der Fa. Hoechst hergestellt; Praepagen ist ein Alkylammoniumsalz und wird von der Fa. Hoechst hergestellt; die übrigen oben angeführten Handelsnamen wurden bereits bei Tabelle 1 näher beschrieben.

Tabelle 3 kann entnommen werden, daß die besten Ergebnisse hinsichtlich Spleißneigung dann erzielt werden, wenn Tenside sowohl in der Spinnmasse als auch im Fällbad und in der Waschflüssigkeit enthalten sind.

Die obigen Beispiele wurden noch mit anionischen Tensiden, z.B. den Natriumsalzen von Dodecylsulfat und Dioctylsulfosuccinat, durchgeführt und praktisch die gleichen Ergebnisse erzielt.

## Patentansprüche

1. Verfahren zur Herstellung cellulosischer Formkörper indem eine Lösung von Cellulose in einem tertiären Aminoxid durch eine Formgebungsvorrichtung extrudiert und die extrudierte Lösung unter Verzug in ein wässeriges Fällbad geführt wird, in welchem sie zum Formkörper koaguliert, wonach der Formkörper mit einer wässerigen Waschflüssigkeit gewaschen wird, dadurch gekennzeichnet, daß das zum Koagulieren eingesetzte Fällbad und/oder die zum Waschen eingesetzte Waschflüssigkeit ein Tensid in gelöster Form enthalten/enthält.

2. Verfahren nach Anspruch 1, daß das im Fällbad und/oder in der Waschflüssigkeit gelöste Tensid in einer Konzentration enthalten ist, die über der kritischen Micellbildungskonzentration liegt.

3. Verfahren nach Anspruch 2, dadurch gekennzeichnet, daß das im Fällbad und/oder in der Waschflüssigkeit gelöste Tensid in einer Konzentration zwischen 0,01 und 5 Masse% vorliegt.

4. Verfahren nach einem oder mehreren der Ansprüche 1 bis 3, dadurch gekennzeichnet, daß eine Celluloselösung eingesetzt wird, welche ein Tensid enthält.

5. Verwendung von Tensiden als Zusatzstoff mit einer Mindestkonzentration von 0,5 Masse%, bezogen auf die Cellulose, in einer Lösung von Cellulose in einem tertiären Aminoxid zur Herstellung eines Formkörpers mit verringerter Fibrillierneigung.

## Claims

1. Method for producing cellulosic moulded bodies by extruding a solution of cellulose in a tertiary amine oxide through a shaping device and passing the extruded solution under draft into an aqueous precipitation bath in which it coagulates to form the moulded body, after which the moulded body is washed with an aqueous washing liquid, characterized in that the precipitation bath used for the coagulation and/or the washing liquid used for the washing contain/contains a surfactant in dissolved form.

2. Method according to Claim 1, characterized in that the surfactant dissolved in the precipitation bath and/or in the washing liquid is contained in a concentration which is above the critical micelle-forming concentration.

3. Method according to Claim 2, characterized in that the surfactant dissolved in the precipitation bath and/or in the washing liquid is present in a concentration between 0.01 and 5% by mass.

4. Method according to one or more of Claims 1 to 3, characterized in that a cellulose solution is used which contains a surfactant.

5. Use of surfactants as additive having a minimum concentration of 0.5% by mass in a solution of cellulose in a tertiary amine oxide to produce a moulded body having reduced fibrillation tendency.

## Revendications

1. Procédé de préparation de corps ou articles moulés cellulosiques, conformément auquel on extrude une solution de cellulose dans un oxyde d'amine tertiaire, à travers une installation de moulage et on conduit la solution extrudée avec retard dans un bain de précipitation aqueux dans lequel elle coagule en corps ou articles moulés, puis on lave les corps ou articles moulés avec un liquide de lavage aqueux, caractérisé en ce que le bain de précipitation mis en oeuvre pour la coagulation et/ou le liquide de lavage mis en oeuvre pour le lavage contiennent un tensioactif ou surfactif sous forme dissoute.

2. Procédé suivant la revendication 1, caractérisé en ce que le tensioactif ou surfactif dissous dans le bain de précipitation et/ou dans le liquide de lavage y est en une concentration qui est supérieure à la concentration de formation de micelles critique.

3. Procédé suivant la revendication 2, caractérisé en ce que le tensioactif ou surfactif dissous dans le bain de précipitation et/ou dans le liquide de lavage y est présent en une concentration comprise entre 0,01 et 5% massiques.

4. Procédé suivant une ou plusieurs des revendications 1 à 3, caractérisé en ce que l'on met en oeuvre une solution de cellulose qui contient un tensioactif ou surfactif.

5. Utilisation de surfactifs ou tensioactifs, à titre d'additif avec une concentration minimale de 0,5% massique, par rapport à la cellulose, dans une solution de cellulose, dans un oxyde d'amine tertiaire, en vue de la préparation d'un corps ou article moulé à tendance réduite à la fibrillation.
